# EUROPEAN PATENT APPLICATION

(11) **EP 1 288 234 A1**
(43) Date of publication of application: **05.03.2003**
(21) Application number: 01203208.2
(22) Date of filing: 27.08.2001
(51) Int. Cl.: C08F 220/12, C09D 5/16

(54) **Binders with low content in hydrolysable monomer suitable for selfpolishing antifouling paints**

(71) Applicant: SIGMA COATINGS B.V., 1422 AD Uithoorn (NL)
(72) Inventor: Gillard, Michel, 1348 Louvain-la-Neuve (BE); Vos, Marcel, 1400 Nivelles (BE)
(74) Representative: Walsh, David Patrick

(57) **Abstract**

Film-forming polymer prepared by polymerisation of:
- from more than 0 up to 4 mol% of at least one ethylenically unsaturated monomer unit A selected from the carboxylic acid and sulfonic acid derivatives that can yield an acid function upon hydrolysis in water;
- from 5 to 45 mol% of at least one monomer unit B selected from the group consisting of the N-vinyl lactam monomers of general formula CH2=CH-N-CO-R'| , the N-vinyl amides of general formula CH2=CH-NR-CO-R", the monomers of general formula CH2=CR"'-COO-R""-N-CO-R'|, the monomers of general formula CH2=CR"'-COO-R""-NR""'-CO-R", 2-pyrrolidone-1-isoprenyl ketone, and mixtures thereof, wherein
   - R is H or selected from the group consisting of alkyl,
   - R' is a n-alkylidene radical having 2 to 8 carbon atoms,
   - R" is selected from the group consisting of alkyl, cycloalkyl, aryl, alkylaryl and arylalkyl radicals having a maximum of 18 carbon atoms,
   - R"' is H or CH3,
   - R"" is a n-alkylidene radical having from 1 to 8 carbon atoms,
   - R""' is H or R",
   and
- the balance of the monomer units being monomer units C selected from the group consisting of the esters of ethylenically unsaturated carboxylic acids with C1-C18 alcohols, styrene, alpha-methyl styrene, vinyl toluenes, and mixtures thereof.

## Description

The present invention relates to binders for self-polishing antifouling paints. It also relates to their use in self-polishing antifouling paints. The invention further relates to a method for the regulation of the erosion rate of co-polymers containing N-vinyl lactam units (B) in combination with an in sea water hydrolysable functionality (A) that yields upon hydrolysis an acid group linked to the polymer back-bone.

The performance of a ship fails off when marine organisms grow on the submarine parts of her hull.

Applying to the hull a topcoat paint comprising antifouling agents controls the extent of marine fouling. The antifouling agents are biocides that are freed from the paint surface at a rate such that their concentration is lethal to marine organisms near the surface.

GB-A-1457590 disclosed a film-forming copolymer containing 50-80 wt% triorganotin monomer, which gradually dissolves so that (i) a fresh antifouling paint surface is continuously revealed, and (ii) the surface of the coating is continuously smoothened.

Technologies based on the hydrolysis of the tin-ester bonds at the surface of the binder dominated the market for some 20 years. The reaction takes place only at the surface where diffusion and dilution processes are strong enough to propagate this reaction. The reaction products thus formed are a stable water-soluble methacrylic binder with carboxylic pendant groups and tributyltin oxide (or TBTO, not very stable; TBT hydroxide and chloride are also mentioned as reaction products). The surface layer of the coating loses strength by this process. Additionally, steady leaching of water-soluble pigments and biocides also weakens the surface layer. The surface of the coating thus gradually erodes by the frictional forces of the water exerted by the movement of the ship.

EP-A-0218573 disclosed a polymer for use in marine antifouling paint. The polymer is prepared by polymerisation of:
- from 20 to 45 wt% of monomer units A of at least one triorganotin salt of an olefinically unsaturated carboxylic acid,
- from 5 to 35 wt% of at least one comonomer B selected from the group comprising VP (vinylpyrrolidone), VPi (vinylpiperidone) and VC (vinylcaprolactam), the total of A + B being of from 40 to 70 wt% of the polymer composition, and the balance of the polymer being monomer units C of at least one Cl-C4 alkyl methacrylate and/or styrene.

EP-A-131626 (M&T) disclosed the use of various hydrolysable groups instead of the triorganotin groups. Amongst them, the use of triorganosilyl groups was disclosed. Hydrolysis of the ester bond of triorganosilyl (meth)acrylate yields a water-soluble binder and a non-toxic siloxane. Since then a number of patents occurred with contributions to this silylacrylate technology.

US-A-5436284 (NOF) proposed to use copolymers of trialkylsilyl monomers and ether comonomers. EP-A-714957 (NOF) proposed to use copolymers of trialkylsilyl monomers and comonomers containing a hemiacetal ester group.

EP-A-775733 (Chugoku) proposed to blend copolymers of trialkylsilyl monomers with a chlorinated paraffin. EP-A-802243 (NOF) proposed to blend copolymers of trialkylsilyl monomers with rosin.

WO91/14743 (Courtaulds) proposed the use as stabiliser of a C4+ monoamine or a quaternary ammonium compound.

US-A-5,558,996 (Fuji Photo Film Co). disclosed one example of a monomeric composition containing trimethylsilyl methacrylate, vinylpyrrolidone, ethyl methacrylate and beta-mercaptoethanol, polymerised for the synthesis of a macromonomer containing carboxylic acids and pyrrolidone as polar groups. In said example, the trimethylsilyl group was used as a protective group regenerating a carboxylic acid function after acid hydrolysis. The intermediate silyl acrylate polymer was not isolated.

EP-A-1127902 discloses metal - free binders for self-polishing antifouling paints prepared by polymerisation of:
- from 4 to 50 mol% of monomer units A selected from the group consisting of the trialkylsilyl esters of an ethylenically unsaturated carboxylic acid, and mixtures thereof;
- from 3 to 45 mol% of monomer units B selected from the group consisting of the N-vinyl lactam monomers of general formula CH2=CH-NR""'-CO-R'|, the N-vinyl amides of general formula CH2=CH-N-CO-R", the monomers of general formula CH2=CR"'-COO-R""-NR""'-CO-R'|, the monomers of general formula CH2=CR"'-COO-R""-N-CO-R", 2-pyrrolidone-1-isoprenyl ketone, and mixtures thereof, wherein
   - R' is a n-alkylidene radical having 2 to 8 carbon atoms,
   - R" is selected from the group consisting of alkyl, cycloalkyl, aryl, alkylaryl and arylalkyl radicals having a maximum of 18 carbon atoms,
   - R"' is H or CH3,
   - R"" is a n-alkylidene radical having from 1 to 8 carbon atoms,
   - R""' is H or R",
   and
- the balance of the monomer units being monomer units C selected from the group consisting of the esters of ethylenically unsaturated carboxylic acids with C1-C18 alcohols, styrene, alpha-methyl styrene, vinyl toluenes, and mixtures thereof.

By contrast to the teaching of EP-A-1127902, the present inventor has found that a binder having excellent performances can be formulated with a surprisingly low content of hydrolysable monomer A providing the content of hydrophilic monomer B stays within certain limits. The use of such low content of hydrolysable monomers is also very cost effective.

An object of the present invention is to provide binders with a low hydrolysable monomer content and that can nevertheless be used for self-polishing paints.

Another object is to provide improved erodible antifouling paint compositions for use as topcoat paints for ships' hulls.

A further object of the invention is to provide an improved polymeric binder for a self-polishing antifouling paint which hydrolyses at a predetermined rate in the presence of water.

Yet another object is to provide a method for the regulation of the erosion rate of self-polishing paints based on copolymers containing N-vinyl lactam units (B) in combination with a hydrolysable functionality (A).

The present invention provides new self-polishing polymers for antifouling paints of which the polishing rate can be regulated by simply (1) varying the monomer content of a so called hydrolysable type (A) and an hydrophilic type (B) and (2) by changes in the ratio of A/B.

Co-polymers are water soluble at a certain sufficiently high level of monomer of type B. Below that concentration the polymers loose this property but are still hydrophilic.

The invention shows that hydrophilic co-polymers can, upon hydrolysis, be turned into water soluble polymers by introduction of the claimed low levels (≤ 4 %) of hydrolysable monomer of type A.

Accordingly, the present invention provides a film-forming polymer for use as binder in a self-polishing paint, that can be prepared by polymerisation of:
- from more than 0% up to 4 mol% of at least one ethylenically unsaturated monomer unit A selected from the carboxylic acid and sulfonic acid derivatives that can yield an acid function upon hydrolysis in water;
- from 5 to 45 mol% of at least one monomer unit B selected from the group consisting of the N-vinyl lactam monomers of general formula CH2=CH-N-CO-R'|, the N-vinyl amides of general formula CH2=CH-NR-CO-R", the monomers of general formula CH2=CR"'-COO-R""-N-CO-R'|, the monomers of general formula CH2=CR"'-COO-R""-NR""-CO-R", 2-pyrrolidone-1-isoprenyl ketone, and mixtures thereof, wherein
   - R is H or selected from the group consisting of alkyl,
   - R' is a n-alkylidene radical having 2 to 8 carbon atoms,
   - R" is selected from the group consisting of alkyl, cycloalkyl, aryl, alkylaryl and arylalkyl radicals having a maximum of 18 carbon atoms,
   - R"' is H or CH3,
   - R"" is a n-alkylidene radical having from 1 to 8 carbon atoms,
   - R""' is H or R",
   and
- the balance of the monomer units being monomer units C selected from the group consisting of the esters of ethylenically unsaturated carboxylic acids with C1-C18 alcohols, styrene, alpha-methyl styrene, vinyl toluenes, and mixtures thereof.

Monomers units A are e.g.selected from:
- silyl esters of an ethylenically unsaturated carboxylic acid, and mixtures thereof;
- tin esters of an ethylenically unsaturated carboxylic acid, and mixtures thereof;
- metallic carboxylate salts esters as defined in EP-A-342 276 (Nippon Paint).
- metallic carboxylates as defined in EP-A-1 088 837, EP-A-0982 324 and EP-A-900809 (Kansai Paint ).
- Titanium derivatives as defined in EP-A-0 825 169 (Elf Atochem) and in EP-A-0 - 825 203 (Elf Atochem).
- Phosphorous derivatives as described in EP - A-0 723 967 (Elf Atochem).
- Boron derivatives as defined in WO 200105848 (Yoshitomi).
- Ethylenically unsaturated carboxylic acids blocked by quaternary amines.
- Sulfonic acids blocked by amines as defined in EP-A-0 232 006 (ICI) or in WO 0077103 (Hempel's).
- Ethylenically unsaturated anhydrides.
- Ethylenically unsaturated acid chlorides.

In a preferred embodiment, monomer unit A consists of an ethylenically unsaturated carboxylic acid and mixtures thereof that have formed a silylester (before or after the polymerisation) with any possible combination of alkyls and carboxylates e.g.: ethylenic unsaturation-C(O)-O-Si Rₙ [-O(O)C-Z]₃₋ₙ with n =1,2,3 and Z being any mixture of hydrocarbon-derivatives and/or carboxylates e.g. abietate and naphthenate.

In a more preferred embodiment monomer units A are trialkylsilyl monoesters.

The alkyl groups in the trialkylsilyl part in monomer units A are independently selected from the group consisting of C1 to C8 alkyl groups, preferably C3 and C4, more preferably isopropyl and n-butyl.

In monomers A, the ethylenic unsaturation is preferably selected from the group consisting of acrylic acid, methacrylic acid, maleic acid, fumaric acid, and mixtures thereof, most preferably selected from the group consisting of acrylic acid, methacrylic acid, and mixtures thereof.

The hydrolysable functionality can be present in the monomer A either before polymerisation or introduced by post-derivatisation (see e.g. example 5 - 8) or also created by chemical reaction with a reactive pigment e.g. zinc oxide or cuprous oxide, during paint manufacturing.

The amount of monomer units A used to prepare the film forming polymer is preferably of from 0.1 up to 4.0 mol%, more preferably of from 0.3 to 3.7 mol%, most preferably of from 0.5 to 3.5 mol%.

Monomer units B can be N-vinyl lactam monomers of general formula CH2=CH-N-CO-R'|, wherein R' is a n-alkylidene radical having 2 to 8 carbon atoms, preferably 2 to 4 carbon atoms, more preferably 3 carbon atoms. The most preferred monomer unit B is N-vinylpyrrolidone.

Monomer units B can also be N-vinyl amides of general formula CH2=CH-NR-CO-R", wherein R is H or selected from the group consisting of alkyl and R" is selected from the group consisting of alkyl, cycloalkyl, aryl, alkylaryl and arylalkyl radicals having a maximum of 18 carbon atoms, preferably 2 to 12 carbon atoms, more preferably 2 to 6 carbon atoms.

Monomer units B can further be monomers of general formula CH2=CR"'-COO-R""-N-CO-R'|, wherein R"' is H or CH3, R""' is R" (as defined above) or preferably H, R' is an n-alkylidene radical having 2 to 8 carbon but preferably such that the terminal cycle is 2-pyrrolidone. Preferably, R"' is CH3; examples of such monomers are described in Polymer 39(17), 4165-9, 1998.

Monomer units B can still further be monomers of general formula CH2=CR"'-COO-R""-NR""'-CO-R", wherein R"' is H or CH3, R"" is a n-alkylidene radical having from 1 to 8 carbon atoms, R" is selected from the group consisting of alkyl, cycloalkyl, aryl, alkylaryl and arylalkyl radicals having a maximum of 18 carbon atoms and R""' is R" (as defined above) or preferably H.

The amount of monomer units B used to prepare the film-forming polymer is preferably of from 3 to 45 mol%, more preferably of from 10 to 30 mol%, most preferably of from 15 to 25 mol%. Preferably, the content of B is choosen so as that the polymer conceived will be soluble in water only after hydrolysis of monomer of type A has taken place.

Monomer units C are preferably selected from the group consisting of the esters of ethylenically unsaturated carboxylic acids with C1-C18 alcohols, styrene, alpha-methyl styrene, vinyl toluenes, and mixtures thereof. The ethylenically unsaturated carboxylic acid is more preferably selected from the group consisting of acrylic acid, methacrylic acid, maleic acid, fumaric acid, and mixtures thereof, most preferably selected from the group consisting of acrylic acid, methacrylic acid, and mixtures thereof. The alcohol may be an aliphatic or a cycloaliphatic alcohol, and it may be linear or branched; it is preferably selected from C1-C10 alcohols, more preferably from C1-C4 alcohols, most preferably from C1-C2 alcohols. Typical examples of monomer units of the ester type are stearyl (meth)acrylate, isobornyl (meth)acrylate, lauryl (meth)acrylate, n-butyl (meth)acrylate, isobutyl (meth)acrylate, ethyl (meth)acrylate and methyl (meth)acrylate.

The amount of monomer units C used to prepare the film-forming polymer is preferably of at least 49 mol%.

The polymer can be prepared by addition polymerisation of the appropriate monomers in the appropriate proportions at polymerisation conditions using a free radical catalyst such as e.g. benzoyl peroxide, tert-butyl peroxy 2-ethyl hexanoate (TBPEH), t-butyl peroxybenzoate (TBP), or azobisisobutyronitrile. The reaction is carried out in an organic solvent such as e.g. xylene, toluene, amides such as N-methylpyrrolidone and N,N-dimethylformamide, ethers such as dioxane, THF and diethyl ether, butyl acetate, n-butanol, 2-ethoxyethanol, cyclohexanone, methyl-isoamylketone, 2-methoxyethanol, 2-butoxyethanol, 2-ethoxyethyl acetate, and mixtures thereof. Polymerisation is preferably carried out at a temperature in the range of 70-140°C although higher temperatures may be used providing that the solvent and the catalyst are adapted thereto. Within this range the use of higher temperatures produces polymers of lower molecular weight. Polymerisation may be carried out by heating all the polymer ingredients in the solvent or preferably by gradually adding the monomers and catalyst to the heated solvent. The latter procedure produces polymers of lower molecular weight.
The present invention also provides for the use of the film-forming polymer of the invention in a self-polishing paint. It further provides self-polishing antifouling paints containing as its essential components:
- one or more film-forming polymers according to the invention; and
- one or more antifoulants.
The antifoulant used as the other essential component in the coating composition of the present invention may be any of conventionally known antifoulants. The known antifoulants are roughly divided into inorganic compounds, metal-containing organic compounds, and metal-free organic compounds.

Examples of the inorganic compounds include copper compounds (e.g. copper sulphate, copper powder, cuprous thiocyanate, copper carbonate, copper chloride, and the traditionally preferred cuprous oxide), zinc sulphate, zinc oxide, nickel sulphate, and copper nickel alloys.

Examples of the metal-containing organic compounds include organo-copper compounds, organo-nickel compounds, and organo-zinc compounds. Also usable are manganese ethylene bis dithiocarbamate (maneb), propineb, and the like. Examples of the organo-copper compounds include copper nonylphenol-sulphonate, copper bis(ethylenediamine) bis(dodecylbenzenesulphonate), copper acetate, copper naphtenate, copper pyrithione and copper bis(pentachlorophenolate). Examples of the organo-nickel compounds include nickel acetate and nickel dimethyldithiocarbamate. Examples of the organo-zinc compounds include zinc acetate, zinc carbamate, bis(dimethylcarbamoyl) zinc ethylene-bis(dithiocarbamate), zinc dimethyldithiocarbamate, zinc pyrithione, and zinc ethylene-bis(dithiocarbamate). As an example of mixed metal-containing organic compound, one can cite (polymeric) manganese ethylene bis dithiocarbamate complexed with zinc salt (mancozeb).

Examples of the metal-free organic compounds include N-trihalomethylthiophthalimides, trihalomethylthiosulphamides, dithiocarbamic acids, N-arylmaleimides, 3-(substituted amino)-1,3 thiazolidine-2,4-diones, dithiocyano compounds, triazine compounds, oxathiazines and others.

Examples of the N-trihalomethylthiophthalimides include N-trichloromethylthiophthalimide and N-fluorodichloromethylthiophthalimide. Examples of the dithiocarbamic acids include bis(dimethylthiocarbamoyl) disulphide, ammonium N-methyldithiocarbamate and ammonium ethylene-bis(dithiocarbamate).

Examples of trihalomethylthiosulphamides include N-(dichlorofluoromethylthio)-N',N'-dimethyl-N-phenylsulphamide and N-(dichlorofluoromethylthio)-N',N'-dimethyl-N-(4-methylphenyl)sulphamide.

Examples of the N-arylmaleimides include N-(2,4,6-trichlorophenyl)maleimide, N-4 tolylmaleimide, N-3 chlorophenylmaleimide, N-(4-n-butylphenyl)maleimide, N-(anilinophenyl)maleimide, and N-(2,3-xylyl)maleimide.

Examples of the 3-(substituted amino)-1,3-thiazolidine-2,4-diones include 2-(thiocyanomethylthio)-benzothiazole, 3-benzylideneamino-1, 3-thiazolidine-2,4-dione, 3-(4-methylbenzylideneamino)-1,3-thiazolidine-2,4-dione, 3-(2-hydroxybenzylideneamino)-1,3-thiazolidine-2,4-dione,3-(4-dimethylaminobenzylideamino)-1,3-thiazolidine-2,4-dione, and 3-(2,4-dichlorobenzylideneamino)-1,3-thiazolidine-2,4-dione.

Examples of the dithiocyano compounds include dithiocyanomethane, dithiocyanoethane, and 2,5-dithiocyanothiophene.

Examples of the triazine compounds include 2-methylthio-4-butylamino-6-cyclopropylamino-s-triazine.

Examples of oxathiazines include 1,4,2-oxathiazines and their mono- and di-oxides such as disclosed in PCT patent WO 98/05719: mono- and di-oxides of 1,4,2-oxathiazines with a substituent in the 3 position representing (a) phenyl; phenyl substituted with 1 to 3 substituents independently selected from hydroxyl, halo, C1-12 alkyl, C5-6 cycloalkyl, trihalomethyl, phenyl, C1-C5 alkoxy, C1-5 alkylthio, tetrahydropyranyloxy, phenoxy, C1-4 alkylcarbonyl, phenylcarbonyl, C1-4 alkylsulfinyl, carboxy or its alkali metal salt, C1-4 alkoxycarbonyl, C1-4 alkylaminocarbonyl, phenylaminocarbonyl, tolylaminocarbonyl, morpholinocarbonyl, amino, nitro, cyano, dioxolanyl or C1-4 alkyloxyiminomethyl; naphtyl; pyridinyl; thienyl; furanyl; or thienyl or furanyl substituted with one to three substituents independently selected from C1-C4 alkyl, C1-4 alkyloxy, C1-4 alkylthio, halo, cyano, formyl, acetyl, benzoyl, nitro, C1-C4 alkyloxycarbonyl, phenyl, phenylaminocarbonyl and C1-4 alkyloxyiminomethyl; or (b) a substituent of generic formula 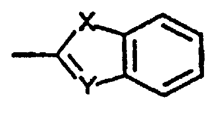 wherein X is oxygen or sulphur; Y is nitrogen, CH or C(C1-4 alkoxy); and the C6 ring may have one C1-4 alkyl substituent; a second substituent selected from C1-4 alkyl or benzyl being optionally present in position 5 or 6.

Other examples of the metal-free organic compounds include 2,4,5,6-tetrachloroisophthalonitrile, N,N-dimethyl-dichlorophenylurea, 4,5-dichloro-2-n-octyl-4-isothiazoline-3-one, N,N-dimethyl-N'-phenyl-(N-fluorodichloromethylthio)-sulfamide, tetramethylthiuramdisulphide, 3-iodo-2-propinylbutyl carbamate, 2-(methoxycarbonylamino)benzimidazole, 2,3,5,6-tetrachloro-4-(methylsulphonyl)pyridine, diiodomethyl-p-tolyl sulphone, phenyl(bispyridine)bismuth dichloride, 2-(4-thiazolyl)benzimidazole, dihydroabietyl amine, N-methylol formamide and pyridine triphenylborane.

According to a preferred embodiment, the use as antifoulant of the oxathiazines disclosed in WO-A-9505739 has the added advantage (disclosed in EP-A-823462) of increasing the self-polishing properties of the paint.

Among the fouling organisms, barnacles have proved to be the most troublesome, because they resist to most biocides. Accordingly, the paint formulation should preferably include at least an effective amount of at least one barnaclecide, such as cuprous oxide or thiocyanate. A preferred barnaclecide is disclosed in EP-A-831134. EP-A-831134 discloses the use of from 0.5 to 9.9 wt%, based on the total weight of the dry mass of the composition, of at least one 2-trihalogenomethyl-3-halogeno-4-cyano pyrrole derivative substituted in position 5 and optionally in position 1, the halogens in positions 2 and 3 being independently selected from the group consisting of fluorine, chlorine and bromine, the substituent in position 5 being selected from the group consisting of C1-8 alkyl, C1-8 monohalogenoalkyl, C5-6 cycloalkyl, C5-6 monohalogenocycloalkyl, benzyl, phenyl, mono- and di-halogenobenzyl, mono- and di-halogenophenyl, mono- and di-C1-4-alkyl benzyl, mono- and di-C1-4- alkyl phenyl, monohalogeno mono-C1-4-alkyl benzyl and monohalogeno mono-C1-4- alkyl phenyl, any halogen on the substituent in position 5 being selected from the group consisting of chlorine and bromine, the optional substituent in position 1 being seclected from C1-4 alkyl and C1-4 alkoxy C1-4 alkyl.

One or more antifoulants selected from such antifoulants are employed in the present invention. The antifoulants are used in such an amount that the proportion thereof in the solid contents of the coating composition is usually from 0.1 to 90% by weight, preferably 0.1 to 80% by weight, and more preferably from 1 to 60% by weight. Too small antifoulant amounts do not produce an antifouling effect, while too large antifoulant amounts result in the formation of a coating film which is apt to develop defects such as cracking and peeling and thus becomes less effective in antifouling property.

The paint may further contains pigment(s) (or fillers), solvent(s) and additive(s).

The paint composition can contain one or more pigments which are "active" pigments, i.e. sparingly soluble in seawater. These pigments have a sea water solubility such that the pigment particles do not survive at the paint surface. These pigments have the effect of inducing the overall smoothing which the relatively-moving seawater exerts on the paint film, minimising localised erosion and preferentially removing excrescences formed during the application of the paint. Sparingly soluble pigments have long been used in self-polishing antifouling paints. Typical examples are cuprous thiocyanate, cuprous oxide, zinc oxide, cupric acetate meta-arsenate, zinc chromate, zinc dimethyl dithiocarbamate, zinc ethylene bis(dithiocarbamate) and zinc diethyl dithiocarbamate. The preferred sparingly soluble pigments are zinc oxide, cuprous oxide and cuprous thiocyanate. Mixtures of sparingly soluble pigments can be used, e.g. zinc oxide, which is most effective at inducing the gradual dissolution of the paint, can be mixed with cuprous oxide, cuprous thiocyanate, zinc dimethyl or diethyl dithiocarbamate, or zinc ethylene bis-(dithiocarbamate) which are more effective marine biocides; the most preferred is a mixture of zinc oxide with cuprous oxide or thiocyanate.

The paint composition can contain one or more pigments that are highly insoluble in seawater, such as titanium dioxide, talc or ferric oxide. Such highly insoluble pigments can be used at up to 40 percent by weight of the total pigment component of the paint. Highly insoluble pigments have the effect of retarding the erosion of the paint.

The paint composition can contain one or more pigments or dyes that impart a colour to the paint, e.g. titanium dioxide, cuprous oxide or iron oxide.

The proportion of pigment to polymer is preferably such as to give a pigment volume concentration of at least 25 percent, more preferably at least 35 percent, in the dry paint film. The upper limit of pigment concentration is the critical pigment volume concentration. Paints having pigment volume concentrations of up to about 50 percent, for example, have been found very effective.
Examples of the organic solvent include aromatic hydrocarbons such as xylene and toluene; aliphatic hydrocarbons such as hexane and heptane, esters such as ethyl acetate and butyl acetate; amides such as N-methylpyrrolidone and N,N-dimethylformamide; alcohols such as isopropyl alcohol and butyl alcohol; ethers such as dioxane, THF and diethyl ether; and ketones such as methyl ethyl ketone, methyl isobutyl ketone and methyl isoamyl ketone. The solvent may be used alone or in combination thereof.

Solvents are used to obtain the desired viscosity at the expected operating temperature for the application on the ship hull, preferably in the range of 5-50 dPa.s, more preferably of 10-20 dPa.s, most preferably of about 15 dPa.s. Obviously, the nature of the solvents is also adapted to the expected operating temperature for the application on the ship hull, taking into account the desired drying time.

Additive ingredients may optionally be incorporated into the coating composition of the present invention thus prepared. Examples of the additive ingredients are dehumidifiers, and additives ordinarily employed in coating compositions as anti-sagging agents, anti-flooding agents, thixotropic and anti-settling agents, stabilisers and anti-foaming agents.

The erosion rate of the copolymers of the invention in an alkaline solution (such as sea water, wich typically has a pH of around 8) can be adjusted by simply varying the content of monomer A and B and changing the ratio A/B. The use of co-monomer B at the right dosage has no negative effect on the properties of the final paint. A too high content of B will yield a water-soluble resin and a too low content of B will reduce the hydrolysis rate of the functionality of monomers of type A to zero. The erosion rate also depends from the type of comonomer A. There appears to be a direct relation between the hydrolysis rate of the copolymers of the invention in seawater and the erosion rate of self-polishing paints prepared with the copolymers of the invention in seawater. Thus, this invention makes it possible to design tin-free self-polishing coatings over a wide range of polishing rates.
Additionally, it has unexpectedly been found that the invention can be applied even in neutral water, so that antifouling coatings can be developed which have self-polishing properties in freshwater (such as lake water or river water). This was totally unexpected because the present tin-based coatings have self-polishing properties only in alkaline water (such as seawater). Thus, the self-polishing antifouling paints of the invention can be used on ship hulls and other structures immersed in freshwater.

### Examples

### Determination of the solids content

The solids content of binder solutions was determined by weighing before and after heating a sample for 1 hour at 120°C [standard test methods ISO 3233/ASTM 2697/DIN 53219]. (Table, Properties, %)

### Determination of the viscosity

The viscosity of binder solutions and of paints was determined with a Brookfield at 25°C [ASTM test method D2196-86]. (Table, Properties, dPa.s)

### Determination of the molecular weight distribution of the polymers

The molecular weight distribution was determined by gel permeation chromatography (GPC) with tetrahydrofuran (THF) as solvent and polystyrene as reference. The weight average molecular weight (Mw) and the polydispersity (d = Mw/Mn) are reported in the Table.

### Determination of adhesion and water sensitivity of the binders

Adhesion was studied by evaluating the adhesion of a draw-down (gap 150 um) either on glass or on an epoxy primer before and after immersion in water (during 24 hours when on glass, for the stated period of time when on epoxy primer). The changes caused by water immersion are reported.

### Evaluation of the hydrolysability of the binders

The hydrolysability has been evaluated by dipping drawdowns in an alkaline solution (NaOH, pH = 13.4) and determining the number of minutes (induction time) before hydrolysis could be observed.

For a more precise evaluation, binder or paint drawdowns on plates were fixed on a hexagonal drum and rotated in an alkaline solution (pH = 11.3, 12.3 or 13.3). The erosion of the film was determined by measuring its thickness at regular intervals. Erosion is reported as a rate expressed in µm /hour.

### Evaluation of the polishing of paints

The erosion rate is the average decrease in film thickness (expressed in µm /month) per month over the whole test (1 month = 30 days).

Stainless steels discs, 20 cm in diameter, were protected with a standard anti-corrosive system (300 µm in dry film thickness). Two layers of the self-polishing paint to be tested were applied, to give a total dry film thickness between 200 and 300 µm. The tests were carried out in constantly refreshed natural seawater, at a constant temperature of 20 °C. The discs were rotated at 1000 rpm, corresponding to about 34 km/hr (18 knots/hr) at 9 cm from the centre.

The total dry film thickness was determined at 7-week intervals, after allowing the paint to dry during one day. It was measured at a number of fixed points, each located at 9 cm from the centre of the discs.

### Examples 1 to 4 and comparative examples A to C

The preparation of the binder is described more particularly for the specific composition of example 1; all monomer compositions are mentioned in Table 1, as well as four properties of the binders. The other operating conditions are identical for all examples, unless stated otherwise. The hydrolysability of the binders was evaluated (Table 2). Finally, the binders were incorporated in two paint formulations of self-polishing antifouling paints (Table 3).

### Preparation of the binder of example 1

310 g xylene and 20 g n-butanol were put in a 2L 4-necked flask and kept under nitrogen. The four necks of the flask were equipped with stirring means, a reflux cooler, a thermometer for temperature control of the reaction, and means for addition of the monomers.

A premix was prepared in a separate vessel; it contained:
- 12.4 g of tributylsilyl methacrylate (TBSiMA), [ 0.9 mol% of monomers]
- 99 g of vinyl pyrrolidone (VP), [18.6 mol% of monomers]
- 111 g of methylmethacrylate, [23.2 mol% of monomers]
- 223 g of methyl acrylate [49.3 mol% of monomers]
- 50 g butyl acrylate [ 8.0 mol% of monomers]
- 19.8 g (= 2% on total monomer weight) of TBPEH (= t-Butyl peroxy-2-ethyl hexoate, sold under the name Trigonox™ 21 S by Akzo-Nobel)
The premix was added drop by drop to the reaction vessel (total time: about 3 hours) whilst maintaining the temperature at 90°C. Thirty minutes after the end of the addition of the premix, five post-additions of 0.2 % TBPEH were made at intervals of 45 minutes. Some 15 minutes after the last post-addition, the temperature was increased up to 120°C during one hour. After cooling the binder solution was thinned down with 75 g xylene to a viscosity of 12.5 dPa.s.

### Paint Formula-PF1

A paint was prepared having the following composition (the vol% figures are calculated on the total solids in the dry paint):
- resin solution 28.60 pbw [56 vol%]
- cuprous oxide 36.20 pbw [22 vol%]
- zinc oxide 13.70 pbw [09 vol%]
- iron oxide 01.40 pbw [01 vol%]
- 4,5-dichloro-2-n-octyl-4-isothiazoline-3-one (as 30 wt% solution) 07.20 pbw [06 vol%]
- thixotropic additives 01.70 pbw [04 vol%]
- molecular sieve (additive) 01.00 pbw [02 vol%]
- xylene 10.50 pbw

### Paint formula PF2

A paint was prepared having the following composition (the vol% figures are calculated on the total solids in the dry paint):
- resin solution 18.90 pbw [37 vol%]
- Gum rosin 5.20 pbw [19 vol%]
- cuprous oxide 36.20 pbw [22 vol%]
- zinc oxide 13.70 pbw [09 vol%]
- iron oxide 01.40 pbw [01 vol%]
- 4,5-dichloro-2-n-octyl-4-isothiazoline-3-one (as 30 wt% solution) 07.20 pbw [06 vol%]
- thixotropic additives 01.70 pbw [04 vol%]
- molecular sieve (additive) 01.00 pbw [02 vol%]
- xylene 15.00 pbw

### Properties of the paint

The paints thus obtained have also been tested for anti-fouling activity by applying it to a plaque over a vinyl resins/tar anti-corrosive paint, mounting the plaque on a panel and immersing the panel from a raft in a river estuary off Southern Netherlands during 12 months. Each panel also included plaques coated with a non-toxic control (which became heavily fouled with seaweed and some animal life within 4 weeks).

No significant weed or animal fouling has been observed on the panels coated with the paint of the invention, and the algal slime was practically non-existent.

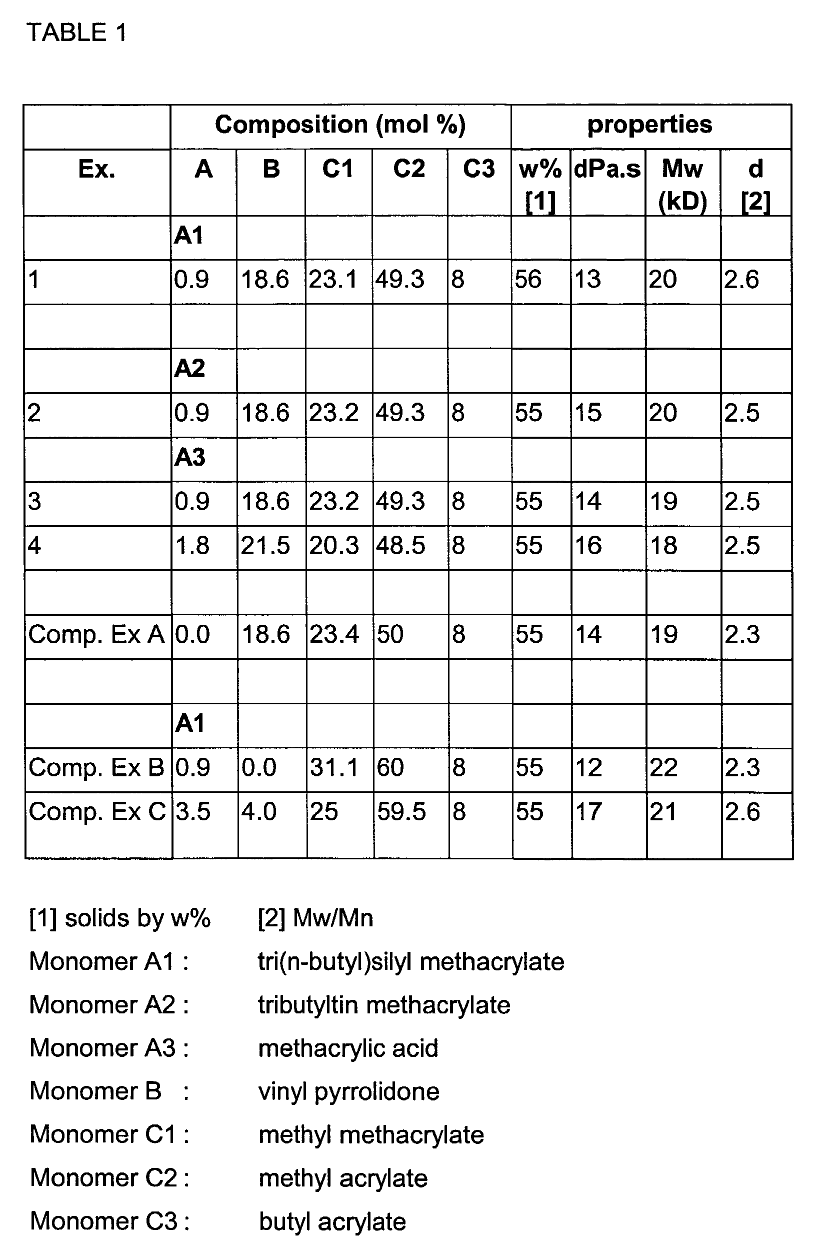

### Examples 5 to 8: post derivatisations of acid polymers

Ex 5 is prepared by reaction of 722 g of ex. 4 and 24 g rosin with 9.1 g dichlorodimethylsilane in the presence of 14 g triethyl amine.The formed white salt was separated from the resin solution after stirring for 16 hrs. The final resin containing 1.8 mol% of a hydrolysable monomer, has a viscosity of 10 dPa.s, a solids content of 53 % and a Mw (by GPC) of 20 kD.

Ex 6 is prepared by reaction of 742g of ex. 4 and an additional amount of 49 g rosin with 10.5 g methyltrichlorosilane in the presence of 21 g triethylamine. The formed white salt was separated from the resin solution after stirring for 16 hrs. The final resin containing 1.8 mol% of a hydrolysable monomer, has a viscosity of 23 dPa.s, a solids content of 54 and a Mw (by GPC) of 30 kD.

Ex 7 is prepared by reaction of 900 g of ex. 4, after being thinned down to 50 % solids, with 3.25 g of zinc oxide. The formed water, 0.7 g, can be removed by distillation. The final resin containing 1.8 mol% of a hydrolysable monomer, has a viscosity of 27 dPa.s and a solids content of 52 %.

Ex 8 is prepared by reaction of 900 g of ex. 4, after being thinned down to 50 % solids, with 78 mmol copper acetate and 78 mmole naphtenic acid according the procedure given in EP-A-342 276 (Nippon Paint). The final resin containing 1.8 mol% of a hydrolysable monomer, has a viscosity of 38 dPa.s and a solids content of 50 %.

**Table 2:**

| Evaluation of the hydrolysability of the binders | |
|---|---|
| Ex. | E/R at pH 12.3# |
| 1 | + |
| 2 | + |
| 3 | + |
| 4 | + |
| 5 | + |
| 6 | + |
| 7 | + |
| 8 | + |
| Comp. Ex. A | - |
| Comp. Ex. B | - |
| Comp. Ex. C | - |

| | |
|---|---|
| # + when > 2 µm/hr; - when < 2 µm/month. | |

**Table 3:**

| Paint performance | | | |
|---|---|---|---|
| Resin example | Paint Formula PF 1 or 2 | Erosion in seawater $ | Protection against fouling after 1 season# |
| 1 | PF1 | + | + |
| 1 | PF2 | + | + |
| 2 | PF1 | + | + |
| 2 | PF2 | + | + |
| 3 | PF1 | + | + |
| 3 | PF2 | + | + |
| 4 | PF1 | + | + |
| 4 | PF2 | + | + |
| 5 | PF1 | + | + |
| 5 | PF2 | + | + |
| 6 | PF1 | + | + |
| 6 | PF2 | + | + |
| 7 | PF1 | + | + |
| 7 | PF2 | + | + |
| 8 | PF1 | + | + |
| 8 | PF2 | + | + |
| Comp. Ex. A | PF1 | - | - |
| Comp. Ex. A | PF2 | - | - |
| Comp. Ex. B | PF1 | - | - |
| Comp. Ex. B | PF2 | - | - |
| Comp. Ex. C | PF1 | - | - |
| Comp. Ex. C | PF2 | - | - |

| | | | |
|---|---|---|---|
| $+ when > 2 µm/month; - when < 2 µm/month. | | | |
| # + when the surface area of the test panel is for more than 80 % of the area (in particular the center area) free from algae and is completely free from hard fouling. The presence of a light slime layer is still acceptable; - when the surface area of the test panels is either for more than 20 % covered with algae (and) or has a moderate to heavy slime layer (and) or has any type of hard fouling present on its surface. | | | |

## Claims

1. Film-forming polymer prepared by polymerisation of:
- from more than 0 up to 4 mol% of at least one ethylenically unsaturated monomer unit A selected from the carboxylic acid and sulfonic acid derivatives that can yield an acid function upon hydrolysis in water;
- from 5 to 45 mol% of at least one monomer unit B selected from the group consisting of the N-vinyl lactam monomers of general formula CH2=CH-N-CO-R'|, the N-vinyl amides of general formula CH2=CH-NR-CO-R", the monomers of general formula CH2=CR"'-COO-R""-N-CO-R'|, the monomers of general formula CH2=CR"'-COO-R""-NR""'-CO-R", 2-pyrrolidone-1-isoprenyl ketone, and mixtures thereof, wherein
- R is H or selected from the group consisting of alkyl,
- R' is a n-alkylidene radical having 2 to 8 carbon atoms,
- R" is selected from the group consisting of alkyl, cycloalkyl, aryl, alkylaryl and arylalkyl radicals having a maximum of 18 carbon atoms,
- R"' is H or CH3,
- R"" is a n-alkylidene radical having from 1 to 8 carbon atoms,
- R""' is H or R",
and
- the balance of the monomer units being monomer units C selected from the group consisting of the esters of ethylenically unsaturated carboxylic acids with C1-C18 alcohols, styrene, alpha-methyl styrene, vinyl toluenes, and mixtures thereof.

2. Film-forming polymer according to claim 1, wherein monomer units A are selected from:
- silyl esters of an ethylenically unsaturated carboxylic acid, and mixtures thereof;
- tin esters of an ethylenically unsaturated carboxylic acid, and mixtures thereof;
- metallic carboxylate salts esters as defined in EP-A-342 276 (Nippon Paint).
- metallic carboxylates as defined in in EP-A-1 088 837, EP-A-0982 324 and EP-A-900809 (Kansai Paint ).
- tintanium derivatives as defined in EP-A-0 825 169 (Elf Atochem) and in EP-A-0 825 203 (Elf Atochem).
- phosphorous derivatives as described in EP - A-0 723 967 (Elf Atochem).
- boron derivatives as defined in WO 200105848 (Yoshitomi).
- carboxylic acids blocked by quaternary amines.
- sulfonic acids blocked by amines as defined in EP-A-0 232 006(ICI) or in WO 0077103 (Hempel's).
- anhydrides
- Acid chlorides.

3. Film-forming polymer according to claim 2, wherein the monomer units A are preferably selected from silyl esters

4. Film-forming polymer according to claim 2, wherein the ethylenically unsaturated monomer in monomer units A is selected from the group consisting of acrylic acid, methacrylic acid, maleic acid, fumaric acid, and mixtures thereof, preferably selected from the group consisting of acrylic acid, methacrylic acid, and mixtures thereof.

5. Film-forming polymer according to claim 3, wherein the monomer units A are selected from trialkylsily monoesters, dialkylsilyl diesters, monoalkylsilyl triesters, silyl tetraesters, more preferably from trialkylsilyl monoester.

6. Film-forming polymer according to claim 5, wherein the alkyl groups of the trialkylsilyl monoester in monomer units A are independently selected from the group consisting of C1 to C8 alkyl groups, preferably C3 and C4, more preferably isopropyl and n-butyl.

7. Film-forming polymer according to claim 1, wherein in monomer units B:
- R' is a n-alkylidene radical having 2 to 4 carbon atoms, preferably 3 carbon atoms, and/or
- R" is selected from the group consisting of alkyl, cycloalkyl, aryl, alkylaryl and arylalkyl radicals having 2 to 12 carbon atoms, preferably 2 to 6 carbon atoms, and/or
- R"' is CH3.

8. Film-forming polymer according to claim 1, wherein in monomer units C the esters are esters of ethylenically unsaturated carboxylic acids with C1-C10 alcohols, preferably with C1-C4 alcohols, more preferably with C1-C2 alcohols.

9. Film-forming polymer according to claim 1, wherein the ethylenically unsaturated monomer in monomer units C is selected from the group consisting of acrylic acid, methacrylic acid, maleic acid, fumaric acid, and mixtures thereof, preferably selected from the group consisting of acrylic acid, methacrylic acid, and mixtures thereof.

10. Film-forming polymer according to any one of claims 1 to 9, prepared by polymerisation of:
- from more than 0 up to 4 mol%, preferably from 0.1 to 4.0 mol%, more preferably from 0.3 to 3.7 mol%, most preferably from 0.5 to 3.5 mol% of monomer units A; and
- from 5 to 45 mol%, preferably from 7.5 to 40 mol%, more preferably from 10 to 30 mol%, most preferably from 15 to 25 mol% of monomer units B; the balance of the monomer units being at least 49 mol% of monomer units C

11. Use of the film-forming polymer according to any one of claims 1 to 10 in a marine paint.

12. Use of the film-forming polymer according to any one of claims 1 to 10 in a self-polishing paint for use in freshwater.

13. Self-polishing antifouling paint containing as essential components:
- one or more film-forming polymers according to any one of claims 1 to 10; and
- one or more antifoulant.
